# EUROPEAN PATENT SPECIFICATION

(11) **EP 1 279 274 B1**
(45) Date of publication and mention of the grant of the patent: **28.02.2007**
(21) Application number: 01924049.8
(22) Date of filing: 12.04.2001
(51) Int. Cl.: H04M 11/04

(54) **ROUTING BASED ON A-SUBSCRIBERS POSITION AND POSITION AND TIME OF STORED EVENTS**
WEGLENKUNG AUF DER GRUNDLAGE DER POSITION VON A-TEILNEHMERN UND DER POSITION UND ZEIT GESPEICHERTER EREIGNISSE
ACHEMINEMENT BASE SUR UNE POSITION D'ABONNES ET POSITION ET HEURE D'EVENEMENTS ENREGISTRES

(30) Priority: 27.04.2000 SE 0001525
(43) Date of publication of application: 29.01.2003
(73) Proprietor: Telia AB (publ), 123 86 Farsta (SE)
(72) Inventor: BERGENDORFF, Hans, S-175 45 Järfälla (SE)
(74) Representative: Hopfgarten, Nils
(86) International application number: PCT/SE2001/000832
(87) International publication number: WO 2001/082580

(56) References cited:
- US-A- 4 893 325
- US-A- 5 528 672
- US-A- 5 592 541
- US-A- 6 075 853

## Description

### TECHNICAL FIELD

The present invention relates to a system and a method for routing and answering of calls from a sender over a communication network according to the preambles of claims 1 and 14 respectively. Thus, the invention is related to a system and a method at a telecommunication and data communication network which make routing based on the A-subscriber's position and position for stored events and points of time in one in said system arranged database possible. The invention is of particular advantage as a system or a method at emergency service centers, for routing of emergency calls.

### BACKGROUND

Emergency service centers, traffic routing centers and radio stations record a larger and larger number of calls with the aim to report traffic accidents, fires, burglaries etc. The number of calls is growing faster than the number of events that shall be reported. One reason for this is for instance the increasing number of mobile telephones. It therefore can be a problem for an operator at an emergency service center, or corresponding receiver of calls, to manage and filter off the calls which are reporting the same event.

One aim of the present invention consequently is to provide a system and a method to solve this problem. More exactly, it is an aim of the invention to provide a system and a method which makes it possible for a receiving operator to, with a minimal effort, find out if an informant who is calling for instance an emergency service center provides the emergency service center with new information or not.

Several systems and methods for managing of calls depending on the position of the calling party are described, some of which are briefly described below:

In US 5,528,672 by Wert is described a telephone network system and a method for the system, where a subscriber can select play-back of a wanted sound message for a calling party, depending on the position of the calling party.

In US 5,592,541 by Fleischer et al is described a device and a method for forwarding of an incoming call, by the use of routing lists defined by the receiving subscriber. Incoming calls are forwarded depending on one or more parameters, for instance sender position.

In US 5, 338, 147 by Grimes is described a cellular communication system, and a method for the system, which is arranged to sense if a calling party makes an emergency call from a cellular telephone. The system then requests that the cellular telephone reports its position in geographic coordinates or as position information converted from geographic coordinates to address or region information.

In US 5,444 760 by Russ, a system and a method for routing of telephone calls incoming to an emergency service center is described. The system makes possible, by the calling party entering a code, routing of a call to emergency duty centers in other fields than emergency services for police, ambulance and fire-brigade. Such emergency duty services can, for instance, include power companies, gas companies or hospitals. To which emergency duty center the call is routed can also be depending on the calling party's address.

In US 4,893,325 by Pankonen et al is described a centralized distribution system for managing of a specific kind of telephone calls, preferably emergency calls, which includes information about the telephone number of the calling station, ANI. According to the suggested solution, detected ANI is used for deriving position information ALI for the calling station from an ALI-database, at which the call then is routed further to an end terminal, together with belonging ALI, for answering of the emergency call.

### SUMMARY OF THE INVENTION

The present invention therefore relates to a system for routing and answering of calls from a sender over a communication network, which system includes a receiving unit, arranged to detect said sender's position, a control unit, connected to the receiving unit, arranged to, depending, on the sender position, route the sender's call to an automatic call answering unit, according to claim 1,

Further, the present invention relates to a method for routing an answering of calls from a sender over a communication network, including the steps; detecting said sender's position, and selecting answering alternative to the sender depending on detected sender position as defined in claim 14.

Preferably a comparison is made between detected sender position and event positions for earlier reported events. If the sender position and an event position corresponds with a preset accuracy, the call answering unit presents to the sender a message with information about the event at that event position. If the informant, the sender, intends to report the same event, he/she can hang up the handset without need for the emergency call operator being burdened. If the informant intends to report another event, he/she can for instance by entering a key set code route the call to the emergency service center operator.

### BRIEF DESCRIPTION OF THE DRAWINGS

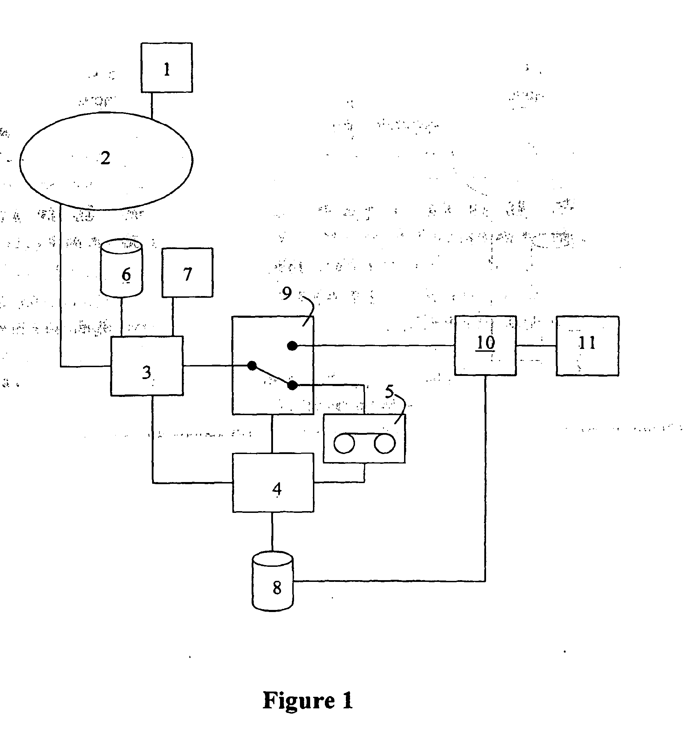

Preferred embodiments of the invention are described in detail below, with reference to the only figure, at which
Figure 1 shows a block diagram for a preferred embodiment of the system according to the invention.

### DETAILED DESCRIPTION OF PREFERRED EMBODIMENTS

In Figure 1 is shown a preferred embodiment of the invention which relates to a system for routing and answering of calls from a sender via his/her terminal 1, over a communication network 2, to said system. The system includes a receiving unit 3, arranged to detect said sender's position, and a control unit 4, connected to the receiving unit, arranged to, depending on the sender position, route the sender's call to an automatic call answering unit 5. Said receiving unit preferably includes an address detecting device which by means of ANI (Automatic Number Identification) is arranged to detect sending/transmitting terminal address in said communication network. Further, the receiving unit includes a positioning device, connected to the address detection device, arranged to, depending on said terminal address, detect said sender's position. Said positioning device is preferably connected to a reference database 6 for ALI (Automatic Location Identification), adapted to storing of sender position information with reference to a given terminal address. In a system also adapted to position finding of mobile terminals 1, said positioning device is connected to an external positioning system 7, adapted to detect a sender terminal's position depending on the sender terminal's address. The positioning system can for instance be based on GPS (Global Positioning System), or on a positioning procedure which is implemented in the wireless communication network, as is described below.

According to the invention, said control unit is connected to an event database 8, adapted to storing of event data including information about an event, time information associated with said event and event position information associated with said event. Further, the system includes a switching unit 9, connected to said receiving unit, said control unit and said automatic call answering unit. Said switching unit is adapted to switching of incoming calls, preferably emergency telephone calls, to said call answering unit or to an operator terminal 10. The control unit preferably includes a comparing device, adapted to compare said sender position with said event position, and a control device, connected to and adapted to control said switching unit depending on said comparing device. Further, said control unit preferably includes data deriving device, arranged to, depending on said comparing device, derive data segments belonging to stored event data from said event database, and data transmission device, arranged for input of said data segment/segments into said call answering unit.

In a preferred embodiment, said data segment/segments include a message containing information about its belonging event data, at which said call answering unit is arranged to present said message to said sender. For a call in the form of speech, said data segment/segments contains a speech message, and for a call in form of text, said data segment/segments include a text message.

Said receiving unit preferably includes a control signal device, adapted to detect control signals from said sender terminal, and to transmit control signals to the control unit, at which said control unit is arranged to control said switching unit depending on said control signals.

Said operator terminal preferably includes device for storing, deleting and modifying event data in said event database. Of this event data, said event position information includes address or region information. In one embodiment said event position information includes a position coordinate in a coordinate system, so called geo-coordinates. Preferably is said operator terminal connected to a position translation unit 11, including device for translation of event position information presented as an address or a region into event position information presented as a position coordinate in a coordinate system, and vice versa.

In one preferred embodiment of the invention, said communication network is a telephone network, and said system is arranged for routing of emergency calls to an emergency call operator.

In one embodiment.said units in the system constitute active elements in a computer system, arranged with a telephone application interface adapted to said communication network; which computer system includes input and output devices, a processor and a memory.

In one preferred embodiment according to the present invention, related to above described system, are included the steps to detect said sender's position and, depending on detected, sender position, route the sender's call either to an automatic call answering unit, or to an operator. The step to detect said sender's position preferably includes the step to detect sending/transmitting terminal address in said communication network. The step to detect said sender's position includes in one embodiment of the procedure further the step to derive sender position information in a reference database where said sender position information is stored with reference to a given terminal address.

The step to detect said sender's position further includes in one embodiment of the procedure the step to derive sender position information from an external positioning system, adapted to detect a sender terminal's position depending on the sender terminal's address.

Further is included the step to store event data including information about an event, time information associated with said event, and event position information associated with said event in an event database. The step to, depending on user position, route the sender's call to an automatic call answering unit at that preferably includes the steps to make a comparison of said sender position with said event position, and to route said call depending on said comparison. The step to route said call depending on said comparison preferably includes the steps to determine, with preset accuracy, if said sender position corresponds with said event position, and to route the call to the call answering unit if it is judged that the sender position corresponds with the event position, or to route the call to the operator if it is judged that the sender position does not correspond with the event position.

For a call routed to said call answering unit, said call answering unit preferably presents a message to said sender, which message contains information about event data from said event database regarding an event, the event position of which corresponds with the sender position. For a speech call said message is presented as a speech message, and for a text call said message is presented as a text message.

Further are preferably included the steps that the sender, in the case that he/she intends to report another event than the one that has been presented by the call answering unit, provides/transmits a control signal, at which the call is connected to said operator depending on said control signal. The sender at that informs the operator about an observed event, after which the operator stores event data regarding the observed event in said event database. Said operator preferably deletes or modifies event data in said event database, depending on time passed from storing of the event data, or depending on information reported from a sender in a call. Said event position information preferably includes address or region information and/or a position coordinate in a coordinate system. Further is preferably included the step to translate event position information presented as an address or a region into event position information presented as a position coordinate in a coordinate system, and vice versa.

In one preferred embodiment of the method according to the invention, said sender makes an emergency telephone call, at which said emergency call is routed either to the call answering unit for presentation of information about an earlier reported event at the sender's position, or to an emergency call operator.

In one preferred embodiment of the invention is related to a computer program product adapted for use with a computer system for routing and answering of calls from a sender over a communication network, which computer program product includes a storing medium, on which device is stored for control of the computer system to perform the method steps as above.

The invention relates to a system that can relieve the operators at an emergency service center by filtering off calls from persons who want to report an event which is already reported. This is done by the operator registering events, points of time, and geographical position of the callers in one for that purpose arranged database in the system. By finding the geographical position of the caller, by means of for instance ALI (Automatic Location Identification) or MPS (Mobile Positioning System), and by comparing the position and the point of time with current events which are already stored in said database, certain calls can automatically be filtered off by the system. Further, the system is so arranged that, when calls are coming from a certain region where an already reported event recently has occurred, and when the system automatically has rerouted the call, the person is connected to one in the system arranged voice answer back equipment which informs the calling person about that a certain event has already been reported. If the calling person wants to report another event than the one that is informed about via said voice answer back equipment, he/she can, by for instance an ordinary push-button procedure, be connected to an operator at the emergency service center who receives the person's report.

The invention is intended to be implemented in the existing telecommunication network and there constitute a call sorting mechanism which is offered to emergency service centers, public authorities or others which, via telephone calls, receive different types of event reports from the public.

The system according to the invention consequently makes use of the A-subscriber's position (the informant) and a database over reported and geographically coded current events to control how the call is managed. If there is a current, but already reported, event with the same position as the informant's position within the accuracy that used positioning method makes possible, or other selected accuracy, the call is routed to a voice answer back equipment-where brief information about the already reported current event is orally given to the informant. A typical answer can be: "Thanks for calling SOSAB; We already have a report from 0953 a.m. on a collision between an Opel and a Volvo at Kings Street. If you have anything else to report, please key 1; otherwise key 2 or hang up". Calls where the informant indicates that he/she has something new to report are forwarded to an emergency call operator.

The database with stored events is updated by the emergency call operator when a new event is reported. It is also updated - in most cases by emergency call operator - when action at event has been reported as finished, so that event shall be deleted from the database. In one embodiment there is also a "timeout" of all events, so that they are deleted after x hours, even if action has not been reported as finished.

Description of event can be entered into the database by the emergency call operator either via input of text or speech. If text input is used, this is preferably translated into a spoken message by means of speech synthesis. Speech input is stored digitally. In one embodiment the system is adapted to call and answer in text format, at which said description of event is stored and played back as text.

The position of the event is preferably stored in form of a street address or name of region to make it possible to present the event to new informants, and as a position in the coordinates of the country :to make it possible to decide if a new report relates to event at the same place as earlier reported event.

The position of the event is entered into the system by the operator as a street address if the informant has presented an address, which is the normal alternative. Position in the coordinates of the country is obtained by a translation by means of databases which for instance Telia Infomedia or the National Land Survey have at their disposal.

Otherwise one has to utilize the position information one has got from the network about the A-subscriber's position. If the position information only is position in the coordinates of the country, one translates into region/address depending on what is possible by means of existing databases.

The system according to present invention can be realized by CTI (Computer Telephony Integration), for instance at an ordinary PC with Microsoft's & Intel's TAPI (Telephony Application Interface) and hardware (voice boards, voice modems, PBX boards) which support that interface.

According to one preferred embodiment of the method according to the invention, the informant, also called the sender, keys the number to emergency service center, traffic radio station, road traffic routing center, etc, at which the call is routed to the system according to the invention. The S-system can, by means of CLI (Calling Line Identification) or ANI, which provides the A-subscriber's telephone number, decide if the call is coming from a mobile telephone or a fixed line. By assistance of a database which contains information about the connection between telephone number and operator, the S-system also can decide which operator that may have information about the A-subscriber's position. Telia has, for instance, a database where telephone numbers and corresponding addresses are stored. To find a mobile's position, Ericsson has a product - Ericsson Mobile Positioning System (MPS) which makes possible that a mobile's position can be determined with a sufficient accuracy for the connection that is described here. If the A-subscriber calls from a mobile telephone, which is detected by the system by means of ANI, the system contacts MPS by an http-call. MPS responds by returning the position.

The database can be managed for instance in a PC-environment with for instance SQL or corresponding well known technology.

It is to the expert in the field obvious that several variants and modifications of the described embodiments can be conceived without for that reason land up outside the scope of the invention, which is only limited by the patent claims below.

## Claims

1. System for routing and answering of calls from a sender (1) over a communication network (2), which system includes:
- receiving unit (3), arranged to detect said sender's position;
- control unit (4), connected to the receiving unit, arranged to, depending on the sender position, route the sender's call
- automatic call answering unit (5),
where said receiving unit includes:
- address detection device arranged to detect sending terminal address in said communication network;
- positioning device, connected to the address detection device, arranged to, depending on said terminal address, detect said sender's position, where said positioning device is connected to a reference database (6), adapted to store sender position information with reference to a given terminal address, **characterized in that** said control unit (4) is connected to an event database (8), adapted for storing of event data comprising information about an event, time information associated with said event, and event position information associated with said event, **in that** a switching unit (9) is connected to said receiving unit (3), to said control unit (4) and to said call answering unit (5) for routing the sender's call either to said automatic call answering unit (5) or to an operator (10), and **in that** said control unit (4) includes a comparing device for comparing the sender position with said stored event position information for controlling said routing depending on this comparison.

2. System as claimed in claim 1, where said positioning device is connected to an external positioning system (7), adapted to detect a sender terminal's position depending on the sender terminal's address.

3. System as claimed in claims 1 or 2, where said control unit includes:
- a data deriving device, arranged to, depending on said comparison, derive data segments belonging to stored event data from said event database, and;
- a data transmission device, arranged to enter said data segments into said call answering unit.

4. System as claimed in claim 3, where said data segment(s) include(s) a message containing information about its belonging event data, and where said call answering unit (5) is arranged to present said message to said sender.

5. System as claimed in claim 4, where said data segment(s) include(s) a speech message.

6. System as claimed in claim 4, where said data segments include a text message.

7. System as claimed in claim 5 or 6, where said receiving unit (3) includes a control signal device, adapted to detect control signals from said sender terminal (1), and to transmit control signals to the control unit (4), and where said control unit is arranged to control said switching unit (9) depending on said control signals.

8. System as claimed in claim 7, where said operator terminal includes a device for storing, deleting and modifying event data in said event database (8).

9. System as claimed in any of the claims 1-8, where said event position information includes address or region information.

10. System as claimed in any of the claims 1-8, where said event position information includes a position coordinate in a coordinate system.

11. System as claimed in claims 9 and 10, where said operator terminal is connected to a position translating unit (11), including a device for translation of event position information, presented as an address or a region, into event position information presented as a position coordinate in a coordinate system, and vice versa.

12. System as claimed in any of the previous claims, where said communication network (2) is a telephone network and said system is arranged for routing of emergency calls to an emergency call operator.

13. System as claimed in claim 12, where said units constitute active elements in a computer system arranged with a telephone application interface adapted to said communication network (2).

14. Method for routing and answering of calls from a sender over a communication network, including the steps:
- detecting said sender's position, said step including detection of sending terminal address in said communication network (2), and deriving sender position information from an external positioning system (7), adapted to detect a sender terminal's (1) position depending on the sender terminal's address, and
- depending on detected sender position, routing the sender's call **characterized by** storing event data comprising information about an event, time information associated with said event, and event position information associated with said event, in an event database (8),
- making a comparison of said sender's position with said event position, and
- routing said call either to an automatic call answering unit (5), or to an operator (10), depending on said comparison.

15. Method as claimed in claim 14, where the step to detect said sender's position further includes the step to derive sender position information in a reference database, where said sender position information is stored with reference to a given terminal address.

16. Method as claimed in claim 14, where the step to route said call depending on said comparison includes the steps to:
- decide, with preset accuracy, if said sender position corresponds to said event position,
- route the call to the call answering unit (5) if it is judged that the sender position corresponds to the event position;
- route the call to the operator (10) if it is judged that the sender position does not correspond with the event position.

17. Method as claimed in claim 16, where said call answering unit (5), for a call routed to said call answering unit, presents a message to said sender, which message contains information about event data from said event database (8) regarding an event, the position of which corresponds with the sender position.

18. Method as claimed in claim 17, where said message is presented as a speech message.

19. Method as claimed in claim 17, where said message is presented as a text - message.

20. Method as claimed in claim 18 or 19, further including the steps that
- in the case that the sender intends to report another event than the one that has been presented by the call answering unit (5), the sender transmits a control signal; and
- the call is connected to said operator (10) depending on said control signal.

21. Method as claimed in claim 20, further including the steps that:
- the sender informs the operator about an observed event; and
- the operator stores event data regarding the observed event in said event database (8).

22. Method as claimed in claim 21, where said operator deletes or modifies event data in said event database (8), depending on time passed from storing of the event data, or depending on information reported from a sender in a call.

23. Method as claimed in claim 22, where said event position information includes address or region information.

24. Method as claimed in claim 22, where said event position information includes a position coordinate in a coordinate system.

25. Method as claimed in claims 23 and 24, further including the step to translate event position information presented as an address or a region into event position information presented as a position coordinate in a coordinate system, and vice versa.

26. Method as claimed in any of the claims 14-25, including the steps that:
- said sender makes an emergency call;
- said emergency call is routed either to the call answering unit (5) for presentation of information about an earlier reported event at the sender's position, or to an emergency call operator (10).

27. Method as claimed in claim 26, where said units constitute active elements in a computer system arranged with a telephone application interface adapted to said communication network (2).

28. A computer program product adapted for use with a computer system for routing and answering of calls from a sender over a communication network (2), which computer program product includes a storing medium,
**characterized in** devices stored on said storing medium for control of the computer system to perform the method steps as claimed in claims 14-27.

## Patentansprüche

1. System für Leitweglenkung und Beantwortung von Anrufen von einem Sender (1) über ein Kommunikationsnetz (2), welches System einschließt:
- Empfangseinheit (3), die dazu ausgebildet ist, die Position des Senders zu erkennen;
- Steuereinheit (4), die mit der Empfangseinheit verbunden ist, die dazu ausgebildet ist, in Abhängigkeit von der Position des Senders den Anruf des Senders leitwegmäßig zu lenken;
- automatische Rufbeantwortungseinheit (5),
wobei die Empfangseinheit einschließt:
- Adressendetektionseinrichtung, die dazu ausgebildet ist, die Adresse des sendenden Endgeräts in dem Kommunikationsnetz zu erkennen;
- Positioniereinrichtung, die mit der Adressendetektionseinrichtung verbunden ist, die dazu ausgebildet ist, in Abhängigkeit von der Adresse des Endgeräts die Position des Senders zu erkennen, wobei die Positioniereinrichtung mit einer Bezugsdatenbank (6) verbunden ist, die dazu ausgebildet ist, Senderpositionsinformation mit Bezug auf eine vorgegebene Endgeräteadresse zu speichern, **dadurch gekennzeichnet, dass** die Steuereinheit (4) mit einer Ereignisdatenbank (8) verbunden ist, die dazu ausgebildet ist, Ereignisdaten zu speichern, die Information über ein Ereignis, Zeitinformation, die mit dem Ereignis verknüpft ist, und Ereignispositioninformation aufweisen, die mit dem Ereignis verknüpft ist, dass eine Schalteinheit (9) mit der Empfangseinheit (3), mit der Steuereinheit (4) und der Rufbeantwortungseinheit (5) verbunden ist, um den Anruf des Senders entweder zu der automatischen Rufbeantwortungseinheit (5) oder zu einem Operator (10) zu leiten, und dass die Steuereinheit (4) eine Vergleichseinrichtung zum Vergleichen der Position des Senders mit der gespeicherten Ereignispositionsinformation einschließt, um die Leitweglenkung in Abhängigkeit von diesem Vergleich zu steuern.

2. System nach Anspruch 1, bei dem die Positioniereinrichtung mit einem externen Positionierungssystem (7) verbunden ist, das dazu ausgebildet ist, die Position eines Endgerätes eines Senders in Abhängigkeit von der Adresse des Endgerätes des Senders zu erkennen.

3. System nach Anspruch 1 oder 2, wo die Steuereinheit einschließt:
- eine Datenableitungseinrichtung, die dazu ausgebildet ist, in Abhängigkeit von dem Vergleich Datensegmente abzuleiten, die zu gespeicherten Ereignisdaten von der Ereignisdatenbank gehören; und
- eine Datenübertragungseinrichtung, die dazu ausgebildet ist, die Datensegmente in die Rufbeantwortungseinheit einzugeben.

4. System nach Anspruch 3, wo das/die Datensegment(e) eine Meldung einschließt/einschließen, die Information über ihre zugehörenden Ereignisdaten enthält, und wo die Rufbeantwortungseinheit (5) dazu ausgebildet ist, die Meldung einem Sender darzubieten.

5. System nach Anspruch 4, wo das Datensegment/die Datensegmente eine Sprachmeldung einschließt/einschließen.

6. System nach Anspruch 4, wo die Datensegmente eine Textmeldung einschließen.

7. System nach Anspruch 5 oder 6, wo die Empfangseinheit (3) eine Steuersignaleinrichtung einschließt, die dazu ausgebildet ist, Steuersignale von dem Senderendgerät (1) zu erkennen und Steuersignale zur Steuereinheit (4) zu übertragen, und wo die Steuereinheit dazu ausgebildet ist, die Schalteinheit (9) in Abhängigkeit von den Steuersignalen zu steuern.

8. System nach Anspruch 7, wo das Operatorendgerät eine Einrichtung zum Speichern, Löschen und Verändern von Ereignisdaten in der Ereignisdatenbank (8) einschließt.

9. System nach einem der Ansprüche 1 bis 8, wo die Ereignispositionsinformation Adressen- oder Gebietsinformation einschließt.

10. System nach einem der Ansprüche 1 bis 8, wo die Ereignispositionsinformation eine Positionskoordinate in einem Koordinatensystem einschließt.

11. System nach den Ansprüchen 9 und 10, wo das Operatorendgerät mit einer Positionsübersetzungseinheit (11) verbunden ist, die eine Einrichtung zum Übersetzen von Ereignispositionsinformation, die als eine Adresse oder ein Gebiet dargeboten wird, in Ereignispositionsinformation einschließt, die als eine Positionskoordinate in einem Koordinatensystem dargeboten wird, und umgekehrt.

12. System nach einem der vorangehenden Ansprüche, wo das Kommunikationsnetz (2) ein Telefonnetz ist und das System dazu ausgebildet ist, Notrufe zu einem Notrufoperator zu leiten.

13. System nach Anspruch 12, wo die Einheiten aktive Elemente in einem Computersystem bilden, das mit einer Telefonanwendungsschnittstelle ausgebildet ist, die an das Kommunikationsnetz (2) angepasst ist.

14. Verfahren für Leitweglenkung und Beantwortung von Anrufen von einem Sender über ein Kommunikationsnetz, das die Schritte aufweist:
- die Position des Senders zu erkennen, welcher Schritt Erkennung von Sendeendgerätadresse in dem Kommunikationsnetz (2) einschließt, und Senderpositionsinformation von einem externen Positioniersystem (7) abzuleiten, das dazu ausgebildet ist, die Position eines Senderendgeräts (1) in Abhängigkeit von der Senderendgerätadresse zu erkennen,
- in Abhängigkeit von der erkannten Senderposition den Anruf des Senders leitwegmäßig zu lenken, **gekennzeichnet durch** Speichern von Ereignisdaten, die Information über ein Ereignis, Zeitinformation, die mit dem Ereignis verknüpft ist, und Ereignispositionsinformation, die mit dem Ereignis verknüpft ist, in einer Ereignisdatenbank (8),
- einen Vergleich der Position des Senders mit der Ereignisposition durchzuführen, und
- den Anruf entweder zu einer automatischen Rufbeantwortungseinheit (5) oder zu einem Operator (10) in Abhängigkeit von diesem Vergleich zu leiten.

15. Verfahren nach Anspruch 14, wo der Schritt, die Position des Senders zu erkennen, weiter den Schritt einschließt, die Senderpositionsinformation in einer Bezugsdatenbank abzuleiten, wo die Senderpositionsinformation mit Bezug auf eine vorgegebene Endgeräteadresse gespeichert ist.

16. Verfahren nach Anspruch 14, wo der Schritt, den Anruf in Abhängigkeit von dem Vergleich zu leiten, die Schritte einschließt:
- mit voreingestellter Genauigkeit zu entscheiden, ob die Position des Senders mit der Ereignisposition übereinstimmt,
- den Anruf zur Rufbeantwortungseinheit (5) zu leiten, wenn beurteilt wird, dass die Senderposition der Ereignisposition entspricht;
- den Anruf zum Operator (10) zu leiten, wenn beurteilt wird, dass die Senderposition nicht der Ereignisposition entspricht.

17. Verfahren nach Anspruch 16, wo die Rufbeantwortungseinheit (5) für einen Anruf, der zu der Rufbeantwortungseinheit geleitet wird, eine Meldung dem Sender darbietet, welche Meldung Information über Ereignisdaten von der Ereignisdatenbank (8) einschließt, die ein Ereignis, betreffen, dessen Position der Senderposition entspricht.

18. Verfahren nach Anspruch 17, wo die Meldung als eine Sprachmeldung dargeboten wird.

19. Verfahren nach Anspruch 17, wo die Meldung als eine Textmeldung dargeboten wird.

20. Verfahren nach Anspruch 18 oder 19, das weiter die Schritte aufweist, dass
- im Fall, dass der Sender beabsichtigt, ein anderes Ergebnis als dasjenige zu berichten, das durch die Rufbeantwortungseinheit (5) dargeboten ist, der Sender ein Steuersignal sendet; und
- der Anruf mit dem Operator (10) in Abhängigkeit von dem Steuersignal verbunden wird.

21. Verfahren nach Anspruch 20, das weiter die Schritte aufweist, dass:
- der Sender den Operator über ein beobachtetes Ereignis informiert; und
- der Operator Ereignisdaten, die das beobachtete Ereignis betreffen, in der Ereignisdatenbank (8) speichert.

22. Verfahren nach Anspruch 21, wo der Operator Ereignisdaten in der Ereignisdatenbank (8) löscht oder abwandelt in Abhängigkeit von der Zeit, die seit der Speicherung der Ereignisdaten abgelaufen ist, oder in Abhängigkeit von Information, die von einem Sender in einem Anruf berichtet worden ist.

23. Verfahren nach Anspruch 22, wo die Ereignispositionsinformation Adressen- oder Bereichsinformation einschließt.

24. Verfahren nach Anspruch 22, wo die Ereignispositionsinformation eine Positionskoordinate in einem Koordinatensystem einschließt.

25. Verfahren nach Anspruch 23 und 24, das weiter den Schritt einschließt, Ereignispositionsinformation, die als eine Adresse oder ein Gebiet dargeboten wird, in Ereignispositionsinformation zu übersetzen, die als eine Positionskoordinate in einem Koordinatensystem dargeboten wird und umgekehrt.

26. Verfahren nach einem der Ansprüche 14 bis 25, das die Schritte einschließt, dass:
- der Sender einen Notruf macht;
- der Notruf entweder zur Rufbeantwortungseinheit (5) für Darbietung von Information über ein früher berichtetes Ereignis an der Position des Senders oder zu einem Notrufoperator (10) geleitet wird.

27. Verfahren nach Anspruch 26, wo die Einheiten aktive Elemente in einem Computersystem bilden, das mit einer Telefonanwendungsschnittstelle ausgebildet ist, die an das Kommunikationsnetz (2) angepasst ist.

28. Computerprogrammerzeugnis, das für Benutzung mit einem Computersystem für Leitweglenkung und Beantwortung von Anrufen von einem Sender über ein Telekommunikationsnetz (2) ausgebildet ist, welches Computerprogrammerzeugnis ein Speichermedium einschließt,
**gekennzeichnet durch** Einrichtungen, die auf dem Speichermedium für Steuerung des Computersystems gespeichert sind, um die Verfahrensschritte nach den Ansprüchen 14 bis 27 durchzuführen.

## Revendications

1. Système pour acheminer des appels et répondre à des appels provenant d'un émetteur (1) dans un réseau de communication (2), lequel système comprend :
une unité de réception (3), agencée pour détecter ladite position de l'émetteur ;
une unité de commande (4), connectée à l'unité de réception, agencée pour acheminer l'appel de l'émetteur en fonction de la position de l'émetteur ;
une unité de réponse automatique aux appels (5),
dans lequel ladite unité de réception comprend :
un dispositif de détection d'adresse agencé pour détecter une adresse de terminal d'émission dans ledit réseau de communication ;
un dispositif de positionnement, connecté au dispositif de détection d'adresse, agencé pour détecter ladite position de l'émetteur en fonction de ladite adresse de terminal, ledit dispositif de positionnement étant connecté à une base de données de référence (6), adaptée pour enregistrer des informations de position d'émetteur en référence à une adresse de terminal donné,
**caractérisé en ce que** ladite unité de commande (4) est connectée à une base de données d'événement (8), adaptée pour enregistrer des données d'événement comprenant des informations sur un événement, des informations de temps associées au dit événement et des informations de position d'événement associées au dit événement, **en ce qu'**une unité de commutation (9) est connectée à ladite unité de réception (3), à ladite unité de commande (4) et à ladite unité de réponse aux appels (5) afin d'acheminer l'appel de l'émetteur soit à ladite unité de réponse automatique aux appels (5), soit à un opérateur (10), et **en ce que** ladite unité de commande (4) comprend un dispositif de comparaison destiné à comparer la position de l'émetteur aux dites informations de position d'événement enregistrées afin de commander ledit acheminement en fonction de cette comparaison.

2. Système selon la revendication 1, dans lequel ledit dispositif de positionnement est connecté à un système de positionnement externe (7), adapté pour détecter la position d'un terminal d'émetteur en fonction de l'adresse du terminal d'émetteur.

3. Système selon les revendications 1 ou 2, dans lequel ladite unité de commande comprend :
un dispositif de déduction de données, agencé pour déduire, en fonction de ladite comparaison, des segments de données appartenant aux données d'événement enregistrées à partir de ladite base de données d'événement ; et
un dispositif de transmission de données, agencé pour entrer lesdits segments de données dans ladite unité de réponse aux appels.

4. Système selon la revendication 3, dans lequel ledit ou lesdits segment(s) de données comprend/comprennent un message contenant des informations sur ses/leurs données d'événement d'appartenance, et dans lequel ladite unité de réponse aux appels (5) est agencée pour présenter ledit message au dit émetteur.

5. Système selon la revendication 4, dans lequel ledit ou lesdits segment(s) de données comprend/comprennent un message vocal.

6. Système selon la revendication 4, dans lequel lesdits segments de données comprennent un message textuel.

7. Système selon la revendication 5 ou 6, dans lequel ladite unité de réception (3) comprend un dispositif de signal de commande, adapté pour détecter des signaux de commande provenant dudit terminal d'émetteur (1) et pour transmettre des signaux de commande à l'unité de commande (4), et dans lequel ladite unité de commande est agencée pour commander ladite unité de commutation (9) en fonction desdits signaux de commande.

8. Système selon la revendication 7, dans lequel ledit terminal d'opérateur comprend un dispositif destiné à enregistrer, supprimer et modifier des données d'événement dans ladite base de données d'événement (8).

9. Système selon l'une quelconque des revendications 1 à 8, dans lequel lesdites informations de position d'événement comprennent des informations d'adresse ou de région.

10. Système selon l'une quelconque des revendications 1 à 8, dans lequel lesdites informations de position d'événement comprennent une coordonnée de position dans un système de coordonnées.

11. Système selon les revendications 9 et 10, dans lequel ledit terminal d'opérateur est connecté à une unité de traduction de position (11), comprenant un dispositif destiné à traduire des informations de position d'événement, présentées sous forme d'une adresse ou d'une région, en des informations de position d'événement présentées sous forme d'une coordonnée de position dans un système de coordonnées et vice versa.

12. Système selon l'une quelconque des revendications précédentes, dans lequel ledit réseau de communication (2) est un réseau téléphonique et ledit système est agencé pour acheminer des appels d'urgence à un opérateur d'appel d'urgence.

13. Système selon la revendication 12, dans lequel lesdites unités constituent des éléments actifs dans un système informatique équipé d'une interface d'application téléphonique avec ledit réseau de communication (2).

14. Procédé pour acheminer des appels et répondre à des appels provenant d'un émetteur dans un réseau de communication, comprenant les étapes consistant à :
détecter ladite position de l'émetteur, ladite étape comprenant une détection de l'adresse du terminal d'émission dans ledit réseau de communication (2) et une déduction des informations de position de l'émetteur à partir d'un système de positionnement externe (7), adapté pour détecter la position d'un terminal d'émetteur (1) en fonction de l'adresse du terminal d'émetteur, et
acheminer l'appel de l'émetteur en fonction de la position de l'émetteur détecté,
**caractérisé par** le fait d'enregistrer dans une base de données d'événement (8) des données d'événement comprenant des informations sur un événement, des informations de temps associées au dit événement et des informations de position d'événement associées au dit événement,
de faire une comparaison de ladite position de l'émetteur à ladite position d'événement, et
d'acheminer ledit appel, en fonction de ladite comparaison, soit à l'unité de réponse automatique aux appels (5), soit à un opérateur (10).

15. Procédé selon la revendication 14, dans lequel l'étape consistant à détecter ladite position de l'émetteur comprend en outre l'étape consistant à déduire des informations de position de l'émetteur dans une base de données de référence, dans laquelle lesdites informations de position de l'émetteur sont enregistrées en référence à une adresse de terminal donnée.

16. Procédé selon la revendication 14, dans lequel l'étape consistant à acheminer ledit appel en fonction de ladite comparaison comprend les étapes consistant à :
décider, avec une précision prédéfinie, si ladite position de l'émetteur correspond à ladite position d'événement,
acheminer l'appel à l'unité de réponse aux appels (5) s'il a été estimé que la position de l'émetteur correspond à la position d'événement ;
acheminer l'appel à l'opérateur (10) s'il a été estimé que la position de l'émetteur ne correspond pas à la position d'événement.

17. Procédé selon la revendication 16, dans lequel ladite unité de réponse aux appels (5), pour un appel acheminé à ladite unité de réponse aux appels, présente un message au dit émetteur, le message contenant des informations sur des données d'événement provenant de ladite base de données d'événement (8) concernant un événement dont la position correspond à la position de l'émetteur.

18. Procédé selon la revendication 17, dans lequel ledit message est présenté sous forme d'un message vocal.

19. Procédé selon la revendication 17, dans lequel ledit message est présenté sous forme d'un message textuel.

20. Procédé selon la revendication 18 ou 19, comprenant en outre les étapes par lesquelles :
dans le cas où l'émetteur a l'intention de rapporter un autre événement que celui qui a été présenté par l'unité de réponse aux appels (5), l'émetteur transmet un signal de commande ; et
l'appel est connecté au dit opérateur (10) en fonction dudit signal de commande.

21. Procédé selon la revendication 20, comprenant en outre les étapes par lesquelles :
l'émetteur informe l'opérateur sur un événement observé ; et
l'opérateur enregistre des données d'événement concernant l'événement observé dans ladite base de données d'événement (8).

22. Procédé selon la revendication 21, dans lequel ledit opérateur supprime ou modifie des données d'événement dans ladite base de données d'événement (8), en fonction du temps écoulé depuis l'enregistrement des données d'événement, ou en fonction des informations rapportées par un émetteur dans un appel.

23. Procédé selon la revendication 22, dans lequel lesdites informations de position d'événement comprennent des informations d'adresse ou de région.

24. Procédé selon la revendication 22, dans lequel lesdites informations de position d'événement comprennent une coordonnée de position dans un système de coordonnées.

25. Procédé selon les revendications 23 et 24, comprenant en outre l'étape consistant à traduire des informations de position d'événement présentées sous une forme d'adresse ou de région en des informations de position d'événement présentées sous forme de coordonnée de position dans un système de coordonnées et vice versa.

26. Procédé selon l'une quelconque des revendications 14 à 25, comprenant les étapes par lesquelles :
ledit émetteur fait un appel d'urgence ;
ledit appel d'urgence est acheminé soit à l'unité de réponse aux appels (5) afin de présenter des informations sur un événement rapporté plus tôt à la position de l'émetteur, soit à un opérateur d'appel d'urgence (10).

27. Procédé selon la revendication 26, dans lequel lesdites unités constituent des éléments actifs dans un système informatique équipé d'une interface d'application téléphonique adaptée au dit réseau de communication (2).

28. Produit de programme informatique adapté pour une utilisation avec un système informatique destiné à acheminer des appels et à répondre à des appels provenant d'un émetteur dans un réseau de communication (2), lequel produit de programme informatique comprend un support d'enregistrement, **caractérisé en ce que** des dispositifs sont enregistrés sur ledit support d'enregistrement afin de commander le système informatique pour qu'il exécute les étapes du procédé selon les revendications 14 à 27.
